# EUROPEAN PATENT SPECIFICATION

(11) **EP 2 737 191 B1**
(45) Date of publication and mention of the grant of the patent: **11.09.2024**
(21) Application number: 12740578.5
(22) Date of filing: 25.07.2012
(51) Int. Cl.: F02C 7/32, F02C 7/36, F01D 25/16, F01D 25/18, F02C 6/06

(54) **TURBO-COMPRESSOR TRAIN WITH ROLLING BEARINGS AND SINGLE LUBE PUMP**
TURBOVERDICHTERSTRANG MIT WÄLZLAGERN UND EINER EINZELNEN SCHMIERÖLPUMPE
TRAIN DE TURBOCOMPRESSEUR AVEC PALIERS À ROULEMENT ET UNE SEULE POMPE DE LUBRIFICATION

(30) Priority: 28.07.2011 IT CO20110031
(43) Date of publication of application: 04.06.2014
(73) Proprietor: Nuovo Pignone S.p.A., 50127 Florence (IT)
(72) Inventor: LANDI, Giacomo, I-50127 Florence (IT); PEANO, Guido, I-50127 Florence (IT); CAMATTI, Massimo, I-50127 Florence (IT); NALDI, Lorenzo, I-50127 Florence (IT)
(74) Representative: Novagraaf Group
(86) International application number: PCT/EP2012/064615
(87) International publication number: WO 2013/014198

(56) References cited:
- EP-A2- 1 683 943
- EP-A2- 1 722 074
- EP-A2- 1 930 553
- DE-A1- 2 628 401
- JP-A- S61 187 539
- US-A- 3 170 292
- US-A- 3 216 712
- US-A- 3 687 233
- US-A- 4 669 263
- US-A- 4 834 622
- US-A1- 2004 140 672
- US-A1- 2005 279 102
- US-A1- 2007 060 442
- US-B2- 7 452 181

## Description

### TECHNICAL FIELD

The present disclosure generally relates to mechanisms and techniques for providing an entire turbo-compressor train with a single lube pump and a single lubrication oil medium.

### DISCUSSION OF THE BACKGROUND

EP 1 930 553 A2 discloses a gas turbine engine including a centrifugal compressor having a rotor and a thrust bearing disposed in connection with the rotor. US 4 834 622 A discloses a turbo-compressor train with a gas turbine engine, a load compressor, an accessory gearbox, a lube pump and ball bearings. DE 26 28 401 A1 discloses a gas turbine engine with an alternator using synthetic oil, ball bearings and a single oil pump. EP 1 683 943 A2 discloses a turbogenerator with a single oil pump for a gas turbine engine and a generator. US 2007/0060442 A1 discloses a turbo-compressor train with a gas turbine engine, a centrifugal compressor and an additional gearbox.

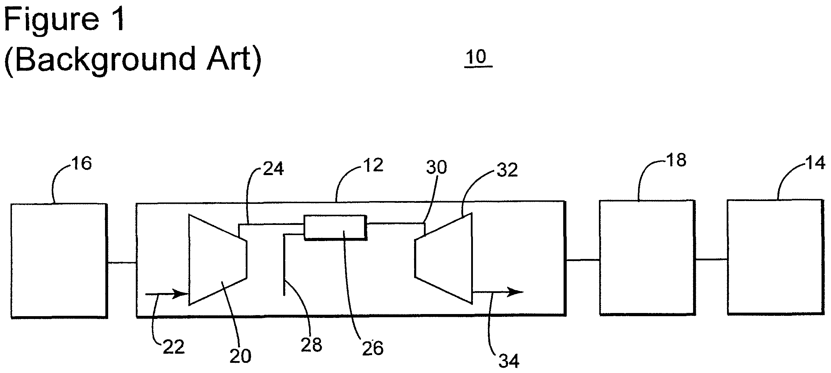

Gas turbine engines are used in many sectors of the industry, from military to power generation. They are used mainly to produce electrical energy. However, some gas turbine engines are used to propel various vehicles, airplanes, ships, etc. In the oil and gas field, the gas turbine engines are used to drive compressors, pumps and/or generators. As shown in Figure 1, a gas turbine engine 12 may be connected to a compressor or generator 14 and to an auxiliary equipment 16. A gear box 18 or other equipment may be provided between the gas turbine engine 12 and the compressor or generator 14. All these elements form a turbo-compressor train 10.

The gas turbine engine 12 may include a compressor 20 that is configured to receive a gas (e.g., air) at an input 22 and to provide the gas compressed to a predetermined pressure at an outlet 24. The compressed gas is then input to a combustor 26 where it is mixed with a fuel provided from a line 28. The mixture of gas and fuel is ignited and the hot gases at high pressure are provided to an input 30 of an expander 32. The exhaust gases are then released at output 34 of the expander 32.

The expansion of the hot gases through the expander 32 determines a rotation of a rotoric part (not shown) which is coupled, through the gear box 18 to a shaft of the compressor 14. Thus, the compressor 14 is driven by the expander 32. One or more of the components of the turbo-compressor train 10 involves heavy rotoric parts (e.g., shaft, impeller, etc.) that rotate at a high speed. In order to promote the rotational motion of these components and to minimize the friction, various bearing units are provided in the train. A few arrangements of conventional turbo-compressor trains are discussed next.

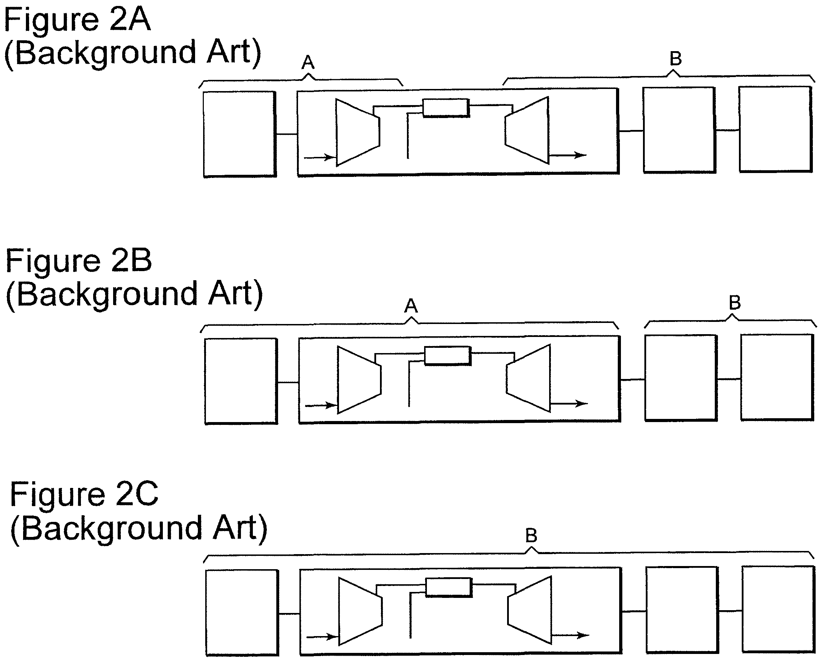

Figures 2A-C show the train 10 of Figure 1 in which some elements have rolling bearings and the remaining elements have hydro-dynamic bearings. Those elements having the rolling bearings are identified with A and those having the hydro-dynamic bearings are identified with B. Further, it is noted that the rolling bearings need to use synthetic oil while the hydro-dynamic bearings need to use mineral oil. Thus, the arrangements shown in Figures 2A and 2B need two lube pumps, one for each type of bearings while the arrangement shown in Figure 2C uses one lube pump and the mineral oil. These arrangements have a higher weight and maintenance cost due to the dual lube pump, they have a large footprint and require higher plant complexity. A disadvantage of the configuration shown in Figure 2C is the higher lube oil consumption needed for hydrodynamic bearings.

Accordingly, it would be desirable to provide systems and methods that avoid the afore-described problems and drawbacks.

### SUMMARY

The present invention is defined in the accompanying claims.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a conventional turbo-compressor train;
Figures 2A-C are schematic diagrams of conventional turbo-compressor trains having two lube pumps or being supplied only with mineral oil;
Figure 3 is a schematic diagram of a rolling bearing;

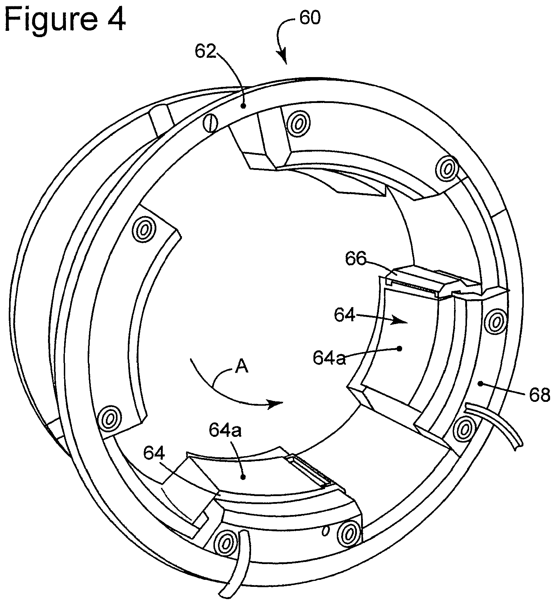

Figure 4 is a schematic diagram of a hydro-dynamic bearing not forming part of the present invention;
Figure 5 is a schematic diagram of a turbo-compressor train having a single lube pump according to an embodiment of the present invention
Figure 6 is a schematic diagram of a turbo-compressor train having a single lube pump electrically connected to the train not forming part of the present invention;
Figure 7 is a schematic diagram of a centrifugal compressor;
Figure 8 is a schematic diagram of another turbo-compressor train having a single lube pump according to an embodiment of the present invention; and
Figure 9 is a flowchart of a method for assembling a turbo-compressor train with a single lube pump according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a gas turbine engine system connected to a compressor or generator. However, the embodiments to be discussed next are not limited to these systems, but may be applied to other systems that have plural machines connected to each other and each machine has its own bearing system.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to the present invention, the components of the entire turbo-compressor train are provided with rolling bearings. Thus, no component has hydro-dynamic bearings, which is different from the traditional trains in which the compressors have hydro-dynamic bearings. In this regard, it is noted that traditional centrifugal compressors do not have rolling bearings because for this solution it is more complex to compensate the axial thrust. Moreover, the dynamic behavior of the compressor with rolling bearings is negatively influenced by the high stiffness, while the solution with hydrodynamic bearings is much more damped. In this configuration, a single lube pump is used for all the components, which results in a lower weight of the train, lower machine cost, lower footprint, and higher reliability. By removing the mineral lube oil pump for the hydro-dynamic bearings, depending on the machine, up to 250 kW of energy may be saved. Therefore, according to this configuration, all the components of the train use synthetic oil. The single lump pump is part of the train.

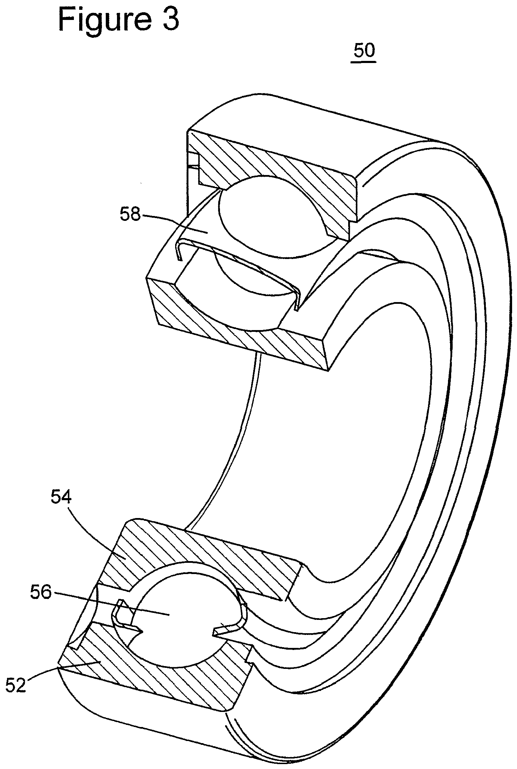

Prior to discussing the arrangement of the novel train, a brief description of a rolling bearing, hydro-dynamic bearing, mineral oil and synthetic oil is believed to be in order. A generic rolling bearing 50 is shown in Figure 3. The rolling bearing 50 includes two races, an exterior race 52 and an interior race 54. These two races guide rolling elements 56. The rolling elements 56 may be balls, as shown in the figure, or may have other shapes, e.g., cylinders, etc. They may be tapered or not. A cage 58 may be used for keeping the rolling elements at desired distances one from the other. Other types of rolling bearings exist and are known in the art.

The rolling bearing 50 shown in Figure 3 is traditionally lubed with synthetic oil or grease, depending on the application. Synthetic oil is a lubricant that includes chemical compounds which are artificially made (synthesized). The synthetic lubricants can be manufactured using chemically modified petroleum components rather than crude oil, but can also be synthesized from other raw materials. Synthetic oil is used as a substitute for lubricant refined from petroleum when operating in extreme temperature, because it generally provides superior mechanical and chemical properties than those found in traditional mineral oils.

A generic hydro-dynamic bearing 60 includes a ring 62 that is configured to hold plural pads 64, each having a working surface 64a. The pads 64 are retained by a blocking plate 66 to prevent them from sliding in a rotational direction A when a shaft (not shown) rotates at high speeds inside the ring 62, in direction A. Corresponding retention plates 68, for preventing axial dislocation, retain the pads 64 in the proximity of the ring 62. Ring 62, blocking plate 66 and retention plates 68 define a predetermined volume in which pad 64 may pivot about a retaining head (not shown). Mineral oil is provided on the working surface 64a so that an oil film forms between the rotating shaft (not shown) and the pads 64.

The mineral oil is a liquid by-product of the distillation of petroleum to produce gasoline and other petroleum based products from crude oil. The mineral oil includes mainly alkanes (typically 15 to 40 carbons) and cyclic paraffins, related to petroleum jelly (also known as "white petrolatum").

As discussed above, according to the present invention, a turbo-compressor train is configured to have only rolling bearings and no hydro-dynamic bearings. Thus, since the compressor in the turbo-compressor train is a centrifugal compressor, no hydro-dynamic bearings are used. In this regard, it is noted that the conventional centrifugal compressors do not use rolling bearings but only hydro-dynamic bearings.

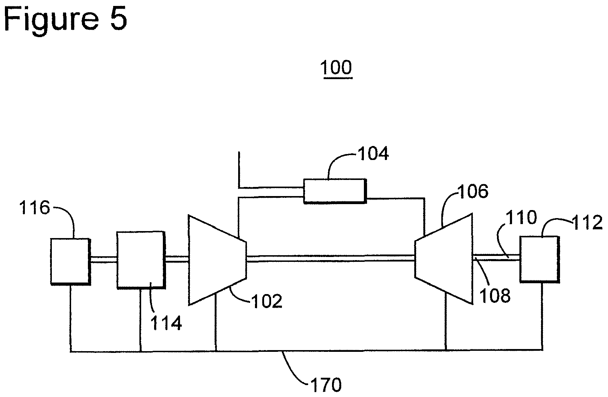

Figure 5 shows an embodiment of a turbo-compressor train 100 according to the present invention having all components provided with rolling bearings and no hydro-dynamic bearings. The turbo-compressor train 100 includes a compressor 102 fluidly connected to a combustion chamber 104 in which fuel and air are mixed together and ignited. The hot gasses are provided to an expander 106 whose shaft is rotated by the expansion of the hot gasses. The expander 106 may be an axial expander. A shaft 108 of the expander 106 is connected to a shaft 110 of a centrifugal compressor 112 and also to the compressor 102. A shaft of the compressor 102 is connected to an auxiliary gear box 114 that is configured to transmit rotational motion to a shaft of a pump 116. The pump 116 is the lube pump for the synthetic oil necessary to the rolling bearings of the various components of the turbo-compressor train.

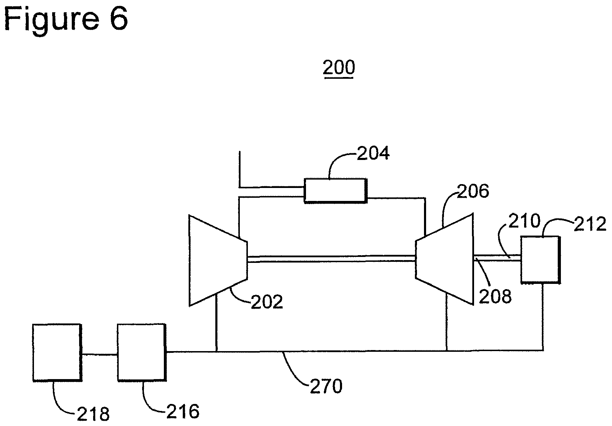

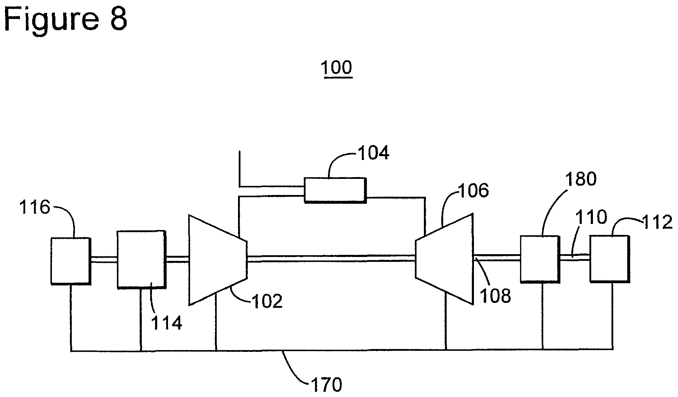

According to a comparative example illustrated in Figure 6 not forming part of the present invention, a train 200 includes all the components shown in Figure 5 for the train 100 except that the pump 216 is not part of the train. Further, the pump 216 is not mechanically (rotational motion) connected to the train. In this exemplary embodiment, the pump is supplied with, for example, electrical power from a power source 218 (e.g., power grid or a power generator of the train). In this regard, it is noted that all the embodiments discussed in this application (e.g., Figures 5 and 8) have the pump mechanically connected to the train.

According to the present invention, the pump 116, the auxiliary gearbox 114, the compressor 102, the expander 106, and the centrifugal compressor 112 each has rolling bearings. Thus, according to this configuration, a single lube pump is used and the only oil used is the synthetic oil. In one application not forming part of the present invention, the centrifugal compressor 112 is replaced by a generator. In this case, the generator has rolling bearings and not hydro-dynamic bearings. Because the rolling bearings may not support enough axial trust in comparison to the hydro-dynamic bearings, a dedicated thrust balance system (developed by the assignee of this patent application) is necessary.

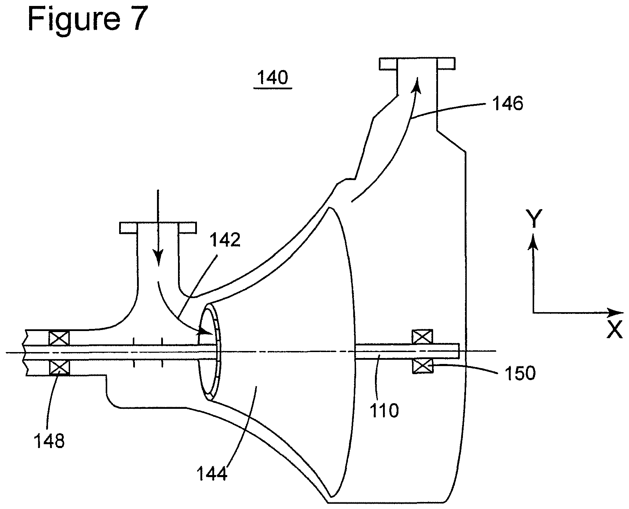

A generic centrifugal compressor 140 modified as discussed above is shown in Figure 7 and is defined by the fact that air intake reaches along an X direction, at position 142, an impeller 144 and exits along a Y direction at position 146 having increased the speed of the air due to the centrifugal motion through the impeller 144. The impeller 144 is shown connected to the shaft 110, which is supported by the rolling bearings 148 and 150.

Returning to Figure 5, it is noted that piping 170 connects the lube pump 116 to each of the components of the turbo-compressor train for supplying the necessary synthetic oil. According to an embodiment illustrated in Figure 8, a gearbox 180 may be provided between the shaft 108 of the expander 106 and the shaft 110 of the centrifugal compressor or generator 112. In this case, the gearbox 180 is configured to use synthetic oil and rolling bearings.

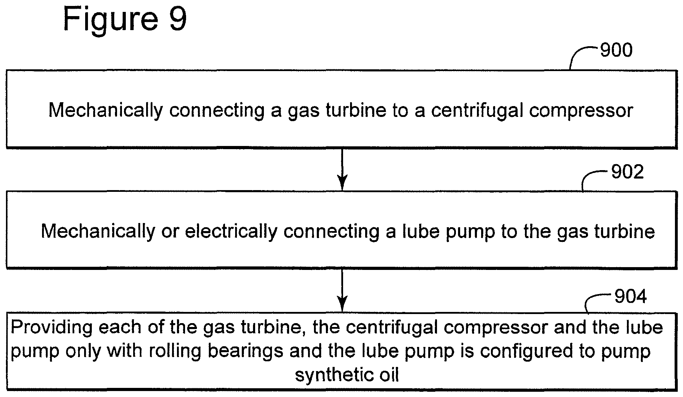

According to an exemplary embodiment illustrated in Figure 9, a method for assembling a train as discussed above is not described. The method includes a step 900 of mechanically connecting a gas turbine engine to a centrifugal compressor; a step 902 of mechanically or electrically connecting a lube pump to the gas turbine engine; and a step 904 of providing each of the gas turbine engine, the centrifugal compressor and the lube pump only with rolling bearings and the lube pump is configured to pump synthetic oil.

The disclosed exemplary embodiments provide a turbo-compressor and a method for providing rolling bearings to each component of the turbo-compressor. It should be understood that this description is not intended to limit the invention. On the contrary, the exemplary embodiments are intended to cover modifications, which are included in the scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

This written description uses examples of the subject matter disclosed to enable any person skilled in the art to practice the same. The patentable scope of the subject matter is defined by the claims.

## Claims

1. A turbo-compressor train (100) for use in the oil and gas field industry to drive a compressor, the train comprising a gas turbine engine (102, 104, 106), a centrifugal compressor (112), an auxiliary gearbox (114), a lube pump (116), a bearing system and a thrust balance system,
the gas turbine engine including a compressor (102) fluidly connected to a combustion chamber (104) in which fuel and air are mixed together and ignited, the hot gases being provided to an expander (106), the gas turbine engine (102, 104, 106) configured to transform thermal energy into mechanical energy, and
the centrifugal compressor (112) having a shaft (110) connected to a shaft (108) of the expander (106),
**characterized in that**
the lube pump is a single lube pump (116) connected to oil piping (170) and configured to provide synthetic oil to the gas turbine engine (102, 104, 106), the centrifugal compressor (112) and the auxiliary gearbox (114),
the auxiliary gearbox (114) connecting a shaft of the compressor (102) to a shaft of the lube pump (116), and the auxiliary gearbox (114) is configured to work with synthetic oil, and
the bearing system of the entire turbo-compressor train (100) being provided with rolling bearings, wherein no component of the train (100) has hydro-dynamic bearings and no mineral oil is used in any component of the train (100),
wherein the bearings of the gas turbine engine (102, 104, 106), the centrifugal compressor (112), the single lube pump (116) and the auxiliary gearbox (114) each comprise only rolling bearings configured to be lubricated by the synthetic oil provided by the single lube pump (116); and
wherein the thrust balance system is configured to compensate axial thrust in the turbo-compressor train (100).

2. The train of claim 1, wherein the gas turbine engine (102, 104, 106) includes an axial expander (106).

3. The train of any preceding claim, further comprising: a gearbox (180) configured to mechanically connect the shaft (108) of the expander (106) and the shaft (110) of the centrifugal compressor (112).

4. A method for assembling a turbo-compressor train (100) for use in the oil and gas field industry as claimed in any preceding claim, the method comprising:
mechanically connecting the shaft (108) of the expander (106) to the shaft (110) of the centrifugal compressor (112);
mechanically connecting via the auxiliary gearbox (114) the shaft of the single lube pump (116) to the shaft of the compressor (102); and
providing each of the gas turbine engine (102, 104, 106), the centrifugal compressor (112), the single lube pump (116) and the auxiliary gearbox (114) only with rolling bearings configured to be lubricated by the synthetic oil provided by the single lube pump (116).

## Patentansprüche

1. Turboverdichterstrang (100) zur Verwendung in der Öl- und Gasfeldindustrie, um einen Verdichter anzutreiben, der Strang umfassend ein Gasturbinentriebwerk (102, 104, 106), einen Radialverdichter (112), ein Hilfsgetriebe (114), eine Schmiermittelpumpe (116), ein Lagersystem und ein Schubausgleichsystem,
wobei das Gasturbinentriebwerk einen Verdichter (102) einschließt, der mit einer Brennkammer (104), in der Kraftstoff und Luft miteinander gemischt und gezündet werden, fluidisch verbunden ist, wobei die heißen Gase an einen Expander (106) bereitgestellt werden, wobei das Gasturbinentriebwerk (102, 104, 106) konfiguriert ist, um eine thermische Energie in eine mechanische Energie umzuwandeln, und
wobei der Radialverdichter (112) eine Welle (110) aufweist, die mit einer Welle (108) des Expanders (106) verbunden ist,
**dadurch gekennzeichnet, dass**
die Schmiermittelpumpe eine einzelne Schmiermittelpumpe (116) ist, die mit der Ölrohrleitung (170) verbunden und konfiguriert ist, um ein synthetisches Öl an dem Gasturbinentriebwerk (102, 104, 106), dem Radialverdichter (112) und dem Hilfsgetriebe (114) bereitzustellen,
das Hilfsgetriebe (114) eine Welle des Verdichters (102) mit einer Welle der Schmiermittelpumpe (116) verbindet und das Hilfsgetriebe (114) konfiguriert ist, um mit dem synthetischen Öl zu arbeiten, und
wobei das Lagersystem des gesamten Turboverdichterstrangs (100) mit Wälzlagern versehen ist, wobei keine Komponente des Strangs (100) hydrodynamische Lager aufweist und kein Mineralöl in einer beliebigen Komponente des Strangs (100) verwendet wird,
wobei die Lager des Gasturbinentriebwerks (102, 104, 106), des Radialverdichters (112), der einzelnen Schmiermittelpumpe (116) und des Hilfsgetriebes (114) jeweils nur Wälzlager umfassen, die konfiguriert sind, um durch das synthetische Öl, das von der einzelnen Schmiermittelpumpe (116) bereitgestellt ist, geschmiert zu werden; und
wobei das Schubausgleichsystem konfiguriert ist, um den axialen Schub in dem Turboverdichterstrang (100) zu kompensieren.

2. Strang nach Anspruch 1, wobei das Gasturbinentriebwerk (102, 104, 106) einen axialen Expander (106) einschließt.

3. Strang nach einem der vorstehenden Ansprüche, ferner umfassend: ein Getriebe (180), das konfiguriert ist, um die Welle (108) des Expanders (106) und die Welle (110) des Radialverdichters (112) mechanisch zu verbinden.

4. Verfahren zum Montieren eines Turboverdichterstrangs (100) zur Verwendung in der Öl- und Gasfeldindustrie nach einem der vorstehenden Ansprüche, das Verfahren umfassend:
mechanisches Verbinden der Welle (108) des Expanders (106) mit der Welle (110) des Radialverdichters (112);
mechanisches Verbinden über das Hilfsgetriebe (114) der Welle der einzelnen Schmiermittelpumpe (116) mit der Welle des Verdichters (102); und
Bereitstellen jedes des Gasturbinentriebwerks (102, 104, 106), des Radialverdichters (112), der einzelnen Schmiermittelpumpe (116) und des Hilfsgetriebes (114) nur mit Wälzlagern, die konfiguriert sind, um durch das synthetische Öl, das von der einzelnen Schmiermittelpumpe (116) bereitgestellt ist, geschmiert zu werden.

## Revendications

1. Train de turbocompresseur (100) destiné à être utilisé dans l'industrie du domaine de l'huile et du gaz pour entraîner un compresseur, le train comprenant un moteur à turbine à gaz (102, 104, 106), un compresseur centrifuge (112), une boîte de vitesses auxiliaire (114), une pompe de lubrification (116), un système de palier et un système d'équilibrage de poussée,
le moteur à turbine à gaz comportant un compresseur (102) relié fluidiquement à une chambre de combustion (104) dans laquelle du carburant et de l'air sont mélangés ensemble et allumés, les gaz chauds étant fournis à un détendeur (106), le moteur à turbine à gaz (102, 104, 106) étant conçu pour transformer de l'énergie thermique en énergie mécanique, et
le compresseur centrifuge (112) ayant un arbre (110) relié à un arbre (108) du détendeur (106),
**caractérisé en ce que**
la pompe de lubrification est une pompe de lubrification unique (116) reliée à une tuyauterie d'huile (170) et conçue pour fournir une huile synthétique au moteur à turbine à gaz (102, 104, 106), au compresseur centrifuge (112) et à la boîte de vitesses auxiliaire (114),
la boîte de vitesses auxiliaire (114) reliant un arbre du compresseur (102) à un arbre de la pompe de lubrification (116), et la boîte de vitesses auxiliaire (114) est conçue pour fonctionner avec de l'huile synthétique, et
le système de palier de l'ensemble du train de turbocompresseur (100) étant pourvu de paliers à roulement, dans lequel aucun composant du train (100) n'a des paliers hydrodynamiques et aucune huile minérale n'est utilisée dans n'importe quel composant du train (100),
dans lequel les paliers du moteur à turbine à gaz (102, 104, 106), le compresseur centrifuge (112), la pompe de lubrification unique (116) et la boîte de vitesses auxiliaire (114) comprennent chacun uniquement des paliers à roulement conçus pour être lubrifiés par l'huile synthétique fournie par la pompe de lubrification unique (116) ; et
dans lequel le système d'équilibrage de poussée est conçu pour compenser une poussée axiale dans le train de turbocompresseur (100).

2. Train selon la revendication 1, dans lequel le moteur à turbine à gaz (102, 104, 106) comporte un détendeur axial (106).

3. Train selon une quelconque revendication précédente, comprenant en outre : une boîte de vitesses (180) conçue pour relier mécaniquement l'arbre (108) du détendeur (106) et l'arbre (110) du compresseur centrifuge (112).

4. Procédé d'assemblage d'un train de turbocompresseur (100) destiné à être utilisé dans l'industrie du domaine de l'huile et du gaz selon une quelconque revendication précédente, le procédé comprenant :
la liaison mécanique de l'arbre (108) du détendeur (106) à l'arbre (110) du compresseur centrifuge (112) ;
la liaison mécanique par l'intermédiaire de la boîte de vitesses auxiliaire (114) de l'arbre de la pompe de lubrification unique (116) à l'arbre du compresseur (102) ; et
la fourniture à chacun du moteur à turbine à gaz (102, 104, 106), du compresseur centrifuge (112), de la pompe de lubrification unique (116) et de la boîte de vitesses auxiliaire (114) uniquement de paliers de roulement conçus pour être lubrifiés par l'huile synthétique fournie par la pompe de lubrification unique (116).
